# EUROPÄISCHE PATENTANMELDUNG

(11) **EP 4 617 081 A1**
(43) Veröffentlichungstag der Anmeldung: **17.09.2025**
(21) Anmeldenummer: 25157520.5
(22) Anmeldetag: 12.02.2025
(51) Int. Cl.: B60C 11/12, B60C 11/03

(54) **FAHRZEUGREIFEN**

(30) Priorität: 14.03.2024 DE 102024107320
(71) Anmelder: Continental Reifen Deutschland GmbH, 30175 Hannover (DE)
(72) Erfinder: Berger, Christoph, 30175 Hannover (DE); Vennebörger, Martin, 30175 Hannover (DE)
(74) Vertreter: Continental Corporation

(57) **Zusammenfassung**

Fahrzeugreifen mit einem laufrichtungsgebunden gestalteten Laufstreifen mit über die Laufstreifenbreite V-förmig zueinander verlaufenden Schrägrillen (1), welche drei Rillenabschnitte (1a, 1b, 1c) aufweisen und langgestreckte Profilblöcke (3) begrenzen,
wobei die Rillenabschnitte (1a, 1b, 1c) unter Winkeln (α₁, α₂, α₃) zur Umfangsrichtung verlaufen, welche beginnend beim laufstreifeninnenseitigen Rillenabschnitt (1a) von Rillenabschnitt (1b) zu Rillenabschnitt (1c) größer sind, wobei mittig innerhalb der Profilblöcke (3) jeweils ein zumindest einen parallel zum laufstreifeninnenseitigen Rillenabschnitt (1a) und einen parallel zum mittleren Rillenabschnitt (1b) der Schrägrillen (1) verlaufenden Einschnittabschnitt (4a, 4b) aufweisender Einschnitt (4) verläuft,

Zumindest einer dieser Einschnittabschnitte (4a, 4b) ist in Richtung Laufstreifenrand fortlaufend verbreitert.

## Beschreibung

Die Erfindung betrifft einen Fahrzeugreifen mit einem laufrichtungsgebunden gestalteten Laufstreifen mit über die Laufstreifenbreite V-förmig zueinander verlaufenden, zumindest Großteils auf die vorgesehene Profiltiefe ausgeführten, einen laufstreifeninnenseitigen Rillenabschnitt, einen laufstreifenrandseitigen Rillenabschnitt und einen mittleren Rillenabschnitt aufweisende Schrägrillen, welche in jeder Laufstreifenhälfte in Umfangsrichtung aufeinanderfolgende und zumindest bis zu den seitlichen Laufstreifenrändern verlaufende langgestreckte Profilblöcke begrenzen,
wobei die Rillenabschnitte unter Winkeln zur Umfangsrichtung verlaufen, welche beginnend beim laufstreifeninnenseitigen Rillenabschnitt von Rillenabschnitt zu Rillenabschnitt größer sind,
und wobei mittig innerhalb der Profilblöcke jeweils ein zumindest einen parallel zum laufstreifeninnenseitigen Rillenabschnitt und einen parallel zum mittleren Rillenabschnitt der Schrägrillen verlaufenden Einschnittabschnitt aufweisender Einschnitt verläuft.

Ein Fahrzeugreifen der eingangs genannten Art ist beispielsweise aus der US 2022/0388345 A1 bekannt. Fahrzeugreifen mit einem derartigen Laufstreifen sind üblicherweise Ganzjahresreifen oder All-Season-Reifen, deren Laufstreifen einen guten Kompromiss zwischen der Haftung auf verschneitem und/oder nassem Untergrund und einer guten Performance auf trockenem Untergrund bietet. Die in den langgestreckten Profilblöcken ausgebildeten Einschnitte weisen über ihre Erstreckung eine konstante Breite auf. Derartige Fahrzeugreifen sollen das ganze Jahr über und bei jedem Wetter mit entsprechender Sicherheit gefahren werden können. Es ist daher von Bedeutung, dass derartige Fahrzeugreifen die Winterzertifizierung 3PMSF (3 Peak Mountain Snow Flake) erhalten, die ihre gute Leistung auf verschneitem und nassem Untergrund bescheinigt. Traktionstests gemäß der Verordnung ECE R117.3 (Winterreifen-Zertifizierung) mit marktüblichen Ganzjahresreifen der eingangs genannten Art haben gezeigt, dass sich die Einschnitte auf schneebedeckten Fahrbahnen mit Schnee füllen und bis zu einem hohen Radschlupf mit Schnee gefüllt bleiben. Erst ab einem Radschlupf von über 100 % reinigen sich die Einschnitte zumindest teilweise von Schnee, da die auf den Schnee in den Einschnitten wirkende Zentrifugalkraft Schnee aus den Einschnitten entfernt. Fahrzeugreifen der eingangs genannten Art haben jedoch ein höheres Potential zur Kraftübertragung auf Schnee, wenn die Einschnitte nicht komplett mit Schnee gefüllt sind bzw. bleiben, weil sie dadurch eine bessere Fräswirkung gegenüber dem Schnee auf der Fahrbahn aufweisen. Markttypische Ganzjahresreifen wie der oben erwähnte und sonstige ähnliche zum Stand der Technik gehörende Fahrzeugreifen schöpfen daher bei mit Schnee gefüllten Einschnitten nicht ihr ganzes Kraftübertragungspotential aus.

Der Erfindung liegt die Aufgabe zugrunde, einen Fahrzeugreifen der eingangs genannten Art dahingehend zu verbessern, dass sich seine Einschnitte bereits bei geringem Schlupf von eingedrungenem Schnee befreien können und der Reifen daher ein höheres Kraftübertragungspotential auf Schnee aufweist.

Gelöst wird die gestellte Aufgabe erfindungsgemäß dadurch, dass sich zumindest einer dieser Einschnittabschnitte in Richtung Laufstreifenrand fortlaufend verbreitert,
wobei an diesen Einschnittabschnitt laufstreifenrandseitig und/oder laufstreifeinnenseitig zumindest ein weiterer Einschnittabschnitt anschließt, welcher sich in Richtung Laufstreifenrand fortlaufend verbreitert oder eine konstante Breite aufweist,
wobei jeder laufstreifenrandseitig anschließende Einschnittabschnitt eine Mindestbreite aufweist, die zumindest der Maximalbreite des sich kontinuierlich verbreiternden Einschnittabschnitts beträgt und
wobei jeder laufstreifeninnenseitig anschließende Einschnittabschnitt eine Maximalbreite aufweist, die höchstens der Mindestbreite des sich kontinuierlich verbreiternden Einschnittabschnitts beträgt.

Durch die erfindungsgemäße Maßnahmen wird die Selbstreinigung der Einschnitte von eingedrungenem Schnee bei einer bei bereits geringen Schlupfwerten wirkenden Zentrifugalkraft deutlich verbessert. Ein gemäß der Erfindung ausgeführter Fahrzeugreifen weist daher ein höheres Potential zur Kraftübertragung auf Schnee als die bislang bekannten Reifen auf. Dies lässt sich durch Traktionstests gemäß der Verordnung ECE R117.3 (Winterreifen-Zertifizierung) bestätigen.

Bei einer bevorzugten Ausführung weist der Einschnitt einen einzigen, sich in Richtung Laufstreifenrand fortlaufend verbreiternden Einschnittabschnitt auf, welcher entweder zum laufstreifeninnenseitigen Rillenabschnitt oder zum mittleren Rillenabschnitt der Schrägrillen parallel verläuft, eine Mindestbreite von 0,40 mm bis 0,60 mm und eine Maximalbreite vom 1,5-Fachen bis 3-Fachen der Mindestbreite aufweist. Insbesondere im mittleren Bereich des Laufstreifens und im mittleren Bereich der Laufstreifenhälften ist es besonders vorteilhaft, wenn ein höheres Potential zur Kraftübertragung auf Schnee zur Verfügung steht, sodass die Traktionseigenschaften des Fahrzeugreifens auf Schnee verbessert sind.

Bei einer weiteren vorteilhaften Ausführung, bei welcher die Traktionseigenschaften im mittleren Laufstreifenbereich und in den mittleren Bereichen der Laufstreifenhälften besonders deutlich verbessert sind, weil die "Selbstreinigungswirkung" von eingedrungenem Schnee besonders effektiv ist, ist sowohl der parallel zum laufstreifeninnenseitigen als auch der sich parallel zum mittleren Rillenabschnitt der Schrägrillen verlaufende Einschnittabschnitt jeweils in Richtung Laufstreifenrand fortlaufend verbreitet, wobei der parallel zum laufstreifeninnenseitigen Rillenabschnitt der Schärgrillen verlaufende Einschnittabschnitt eine Mindestbreite von 0,40 mm bis 0,60 mm und der parallel zum mittleren Rillenabschnitt verlaufende Einschnittabschnitt eine Maximalbreite vom 1,5-Fachen bis 3-Fachen der Mindestbreite aufweist.

Bei einer weiteren, ebenfalls besonders vorteilhaften Ausführung weist der Einschnitt einen weiteren parallel zum laufstreifenrandseitigen Rillenabschnitt der Schrägrillen verlaufenden Einschnittabschnitt auf, wobei sich der Einschnitt über sämtliche Einschnittabschnitte fortlaufend und ausgehend von einer Mindestbreite von 0,40 mm bis 0,60 mm an seinem laufstreifeninnenseitigen Ende bis zum 1,5-Fachen bis 3-Fachen der Mindestbreite beim Laufstreifenrand verbreitert. Bei dieser Ausführung wird eingedrungener Schnee besonders gut in den schulterseitig gelegenen Bereichen des Laufstreifens durch die wirkende Zentrifugalkraft und schon bei geringen Schlupfwerten herausbefördert und dadurch auch die Traktionseigenschaften auf schneeigem Untergrund bei Kurvenfahrt deutlich verbessert.

Bei einer alternativen, ebenfalls bevorzugten Ausführung ist in Fortsetzung des Verlaufs des Einschnitts, welcher parallel zum laufstreifeninnenseitigen Rillenabschnitt und parallel zum mittleren Rillenabschnitt der Schrägrillen verläuft, ein zweiter, parallel zum laufstreifenrandseitigen Rillenabschnitt der Schrägrillen verlaufender Einschnitt vorhanden, welcher sich in Richtung Laufstreifenrand fortlaufend verbreitert. Bevorzugt weist dieser zweite Einschnitt eine Mindestbreite von 0,40 mm bis 0,60 mm an seinem laufstreifeninnenseitig gelegenen Ende und eine Maximalbreite vom 1,5-Fachen bis 3-Fachen der Mindestbreite beim Laufstreifenrand auf.

Der Fahrzeugreifen ist bevorzugt ein Ganzjahresreifen, dessen Laufstreifen einen guten Kompromiss zwischen der Haftung und der Traktion auf verschneitem und/oder nassem Untergrund und einer guten Performance auf trockenem Untergrund darstellt. Diesbezüglich ist es von besonderem Vorteil, wenn der innere Rillenabschnitt der Schrägrillen unter einem Winkel von 40° bis 55° zur Umfangsrichtung, der mittlere Rillenabschnitt unter einem Winkel von 60° bis 70° zur Umfangsrichtung und der laufstreifenrandseitige Rillenabschnitt unter einem Winkel von 75° bis 90° zur Umfangsrichtung verläuft, wobei diese Winkel an den Mittellinien der Rillenabschnitte ermittelt sind. Die parallel zu den Rillenabschnitten verlaufenden Einschnitte und Einschnittabschnitte verlaufen daher ebenfalls unter diesen Winkeln zur Umfangsrichtung.

Bei einer weiteren bevorzugten Ausführung beträgt die Maximalbreite jeweils das 1,5-Fache bis 2-Fache der Mindestbreite.

Bevorzugt ist ferner eine Ausführung, bei welcher sich der Einschnitt bzw. die Einschnitte bzw. der/die Einschnittabschnitte kontinuierlich verbreitern.

Weitere Merkmale, Vorteile und Einzelheiten der Erfindung werden nun anhand der schematischen Zeichnung, die Ausführungsbeispiele darstellt, näher beschreiben. Dabei zeigen
Fig. 1 und Fig. 2 Draufsichten auf einen Umfangsabschnitt eines Laufstreifens eines Fahrzeugreifens mit Ausführungsvarianten der Erfindung und
Fig. 3 eine Schnittdarstellung entlang der Linie III-III der Fig. 1.

Gemäß der Erfindung ausgeführte Fahrzeugreifen sind Reifen für Kraftfahrzeuge, insbesondere für mehrspurige Kraftfahrzeuge, bevorzugt Fahrzeugluftreifen in Radialbauart, insbesondere für Personenkraftwagen (PKWs), Vans (Transporter) sowie SUVs, und Fahrzeugluftreifen für Felgen mit einem ganzzahligen Felgendurchmesser von 13 Zoll bis 24 Zoll, insbesondere von 16 Zoll bis 23 Zoll.

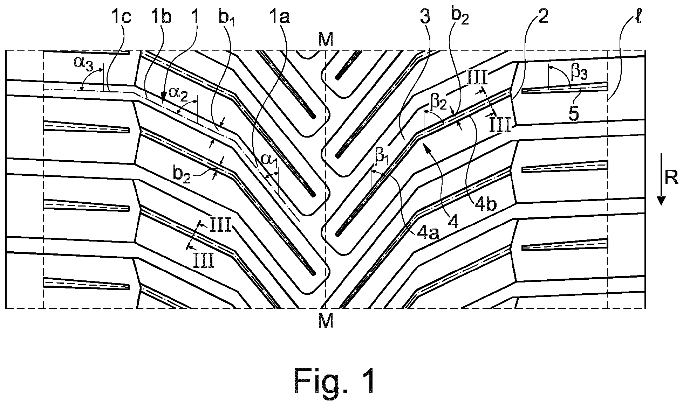

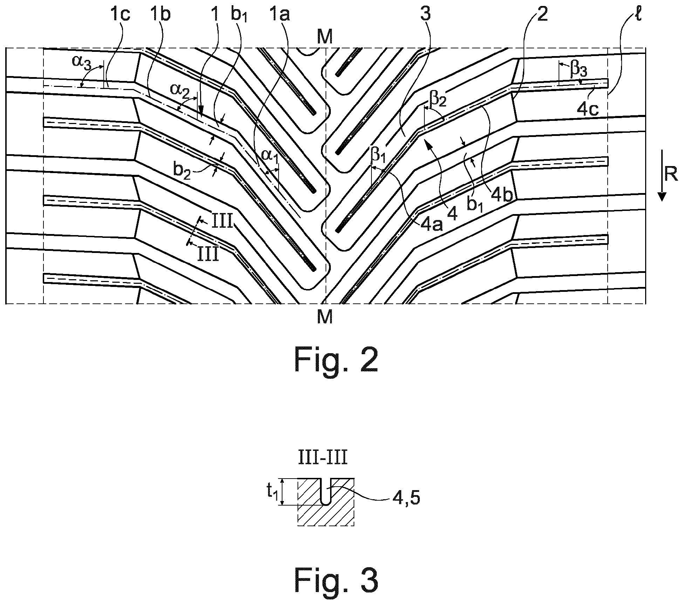

Fig. 1 und Fig. 2 zeigen einen Umfangsabschnitt eines Laufstreifens eines Fahrzeugreifens mit in jeder Laufstreifenhälfte parallel zueinander verlaufenden Schrägrillen 1, welche sich von der Laufstreifenmitte, welche durch die entlang des Reifenäquators verlaufenden und in Umfangsrichtung umlaufenden Umfangsmittellinie M-M gekennzeichnet ist, bis über die seitlichen Laufstreifenränder I hinaus erstrecken. Die Schrägrillen 1 sind die Hauptrillen des Laufstreifens, welche über den Großteil ihrer Erstreckung die für den jeweiligen Fahrzeugreifen vorgesehene maximale Profiltiefe ("die" Profiltiefe bei neuem Reifen) aufweisen und dem Laufstreifen in Draufsicht ein sogenanntes gepfeiltes Profil verleihen. Weitere, bis auf die Profiltiefe reichende Rillen sind nicht vorhanden. Die Abrollrichtung des Fahrzeugreifens bei Vorwärtsfahrt ist durch den Pfeil R angedeutet und ist derart, dass die Schrägrillen 1 bei Vorwärtsfahrt zuerst mit ihren laufstreifeninnenseitigen Enden in die Bodenaufstandsfläche eintreten. Die seitlichen Laufstreifenränder I befinden sich an den seitlichen Rändern der Bodenaufstandsfläche, welche dem statischen Footprint entspricht, der mit einem auf einer Normfelge montierten Reifen, Last bei 70 % der maximalen Tragfähigkeit, Innendruck 85 % des Normdrucks, gemäß E.T.R.T.O Standards in der zum Anmeldezeitpunkt dieser Patentanmeldung geltenden Fassung ermittelt wird.

Die Schrägrillen 1 weisen an der Laufstreifenperipherie eine Breite b₁ auf, die 3,00 mm bis 6,00 mm beträgt. Die Breite b₁ der Schrägrillen 1 ist bei der Umfangsmittellinie M-M geringer ist bei den Laufstreifenrändern I, derart, dass die Breite b₁ von der Umfangsmittellinie M-M bis zu den Laufstreifenrändern I größer wird. Bei der gezeigten Ausführung setzen sich die Schrägrillen 1 in Draufsicht aus drei vorzugsweise gerade verlaufenden Rillenabschnitte 1a, 1b und 1c zusammen, einem laufstreifeninnenseitigen, an die Umfangsmittellinie M-M anschließenden Rillenabschnitt 1a, einem mittleren Rillenabschnitt 1b und einem laufstreifenrandseitigen Rillenabschnitt 1c. Jeder dieser Rillenabschnitte 1a, 1b und 1c verläuft über 25 % bis 40 % der in die axiale Richtung projizierten Breite jeder Laufstreifenhälfte, wobei zumindest die Rillenabschnitte 1a, 1b die erwähnte Profiltiefe aufweisen. Der Rillenabschnitt 1a verläuft unter einem Winkel α₁ von 40° bis 55° zur Umfangsrichtung, der mittlere Rillenabschnitt 1b unter einem Winkel α₂ von 60° bis 70° zur Umfangsrichtung, der Rillenabschnitt 1c unter einem Winkel α₃ von 75° bis 90° zur Umfangsrichtung. Die Winkel α₁, α₂ und α₃ sind zu den Mittellinien der Rillenabschnitte 1a, 1b und 1c ermittelt.

Bei dem in Fig. 1 und 2 gezeigten Ausführungsbeispiel verlaufen ferner zwischen den Knickstellen der Schrägrillen 1, welche zwischen den mittleren und den laufstreifenrandseitigen Rillenabschnitten 1b, 1c vorhanden sind, Einschnitte 2, die sich bei der gezeigten Ausführung aus zwei flach V-förmig zueinander verlaufenden Einschnittabschnitten zusammensetzen, wobei die V-Spitze jeweils zur Laufstreifenmitte zeigt. Alternativ sind gerade verlaufende Einschnitte vorgesehen. Die Einschnitte 2 weisen an der Laufstreifenperipherie eine Breite von 0,40 mm bis 4,00 mm auf, ihre Tiefe beträgt in der Größenordnung von 1,00 mm bis 4,00 mm. Alternativ sind keine Einschnitte 2 vorhanden.

Zwischen den in Umfangsrichtung aufeinanderfolgenden Schrägrillen 1 befinden sich, beginnend bei der Laufstreifenmitte, und bis über die Laufstreifenränder I hinaus reichend langgestreckte Profilblöcke 3.

Bei der in Fig. 1 gezeigten Ausführung ist in den Profilblöcken 3 verläuft mittig zwischen den und parallel zu den Rillenabschnitten 1a und 1b jeweils ein Einschnitt 4, welcher am laufstreifeninnenseitigen Endbereich des betreffenden Profilblocks 3 an der Umfangsmittellinie M-M beginnend bis zum laufstreifenaußenseitigen Ende des Rillenabschnitts 1b reicht und daher analog zu den Rillenabschnitten 1a und 1b zwei Einschnittabschnitte 4a, 4b aufweist. In den Profilblöcken 3 verläuft ferner zwischen den laufstreifenrandseitigen Rillenabschnitten 1c jeweils ein separater Einschnitt 5, ebenfalls mittig, parallel zu den Rillenabschnitten 1c und über zumindest 90 % der Erstreckungslänge der Rillenabschnitte 1c.

Bei der in Fig. 2 gezeigten Ausführung sind von der Laufstreifenmitte bis zu den Laufstreifenrändern I durchgehend verlaufende Einschnitte 4 mit Einschnittabschnitten 4a, 4b, 4c vorgesehen.

Die Einschnittabschnitte 4a verlaufen zur Umfangsrichtung unter einem Winkel β₁, dessen Größe dem jeweiligen Winkel α₁ entspricht, die Einschnittabschnitte 4b zur Umfangsrichtung unter einem Winkel β₂, welcher dem jeweiligen Winkel α₂ der Rillenabschnitte 1b relativ zur Umfangsrichtung entspricht. Die schulterseitigen Einschnitte 5 und die Einschnittabschnitte 4c verlaufen unter einem Winkel β₃ relativ zur Umfangsrichtung, welcher dem Winkel α₃ der schulterseitigen Rillenabschnitte 1c relativ zur Umfangsrichtung entspricht. Der Winkel β₁ beträgt daher 40° bis 55° relativ zur Umfangsrichtung, der Winkel β₂ 60° bis 70° und der Winkel β₃ 75° bis 90°. Die Winkel β₁, β₂ und β₃ sind zu den Mittellinien der Einschnittabschnitte 4a, 4b, 4c und des Einschnitts 5 ermittelt.

Wie beispielhaft anhand der Schnittdarstellung in Fig. 3 gezeigt ist, weisen die Einschnitte 4 und 5 im Querschnitt Einschnittwände auf, die über die gesamte Erstreckung der Einschnitte 4, 5 in radialer Richtung orientiert sind. Die Tiefe t₁ der Einschnitte 4, 5 folgt der Tiefe der Schrägrillen 1 derart, dass die Tiefe t₁ in den Einschnittabschnitten 4a, 4b, 4c sowie den Einschnitten 5 jeweils vorzugsweise konstant ist und um 10 % bis 30 % geringer ist als die dort vorhandene Profiltiefe. Alternativ weisen die Einschnitte 4, 5 abschnittsweise bzw. lokal Grundanhebungen auf, bei welchen die Tiefe auf bis zu 30 % der Profiltiefe verringert ist, die Höhe der Grundanhebungen beträgt daher bis zu 70% der Profiltiefe.

Bei der Ausführung gemäß Fig. 1 weisen die Einschnitte 4 eine Breite b₂ auf, welche ausgehend von den Enden der Einschnitte 4 nahe der Umfangsmittellinie M-M bis zu den Enden der Einschnitte 4 bei den Einschnitten 2 fortlaufend, insbesondere kontinuierlich, größer wird. Die Breite b₂ beträgt an den laufstreifeninnenseitigen Enden der Einschnitte 4 0,40 mm bis 0,60 mm und ist an den laufstreifenaußenseitig gelegenen Enden das 1,5-Fache bis 3-Fache, insbesondere das 1,5-Fache bis 2-Fache, der Breite b₂ der Einschnitte 4 an den laufstreifeninnenseitigen Enden. Bei einer alternativen Ausführung ist die Breite b₂ in einem der Einschnittabschnitte 4a oder 4b konstant, über die Gesamterstreckung der Einschnittabschnitte 4a und 4b und vom laufstreifeninnenseitigen Ende des Einschnitts 4 betrachtet, ohne geringer zu werden. So weist beispielsweise der Einschnittabschnitt 4a eine konstante Breite im Bereich von 0,40 mm bis 0,60 mm auf, der Einschnittabschnitt 4b beginnt mit einer Breite, die der Breite des Einschnittabschnitts 4a entspricht und ändert seine Breite kontinuierlich auf das 1,5-Fache bis 3-Fache. Alternativ weist der Einschnittabschnitt 4a eine Breite auf, die laufstreifeninnenseitig 0,40 mm bis 0,60 mm beträgt und auf das 1,5-Fache bis 3-Fache ansteigt, wobei der Einschnittabschnitt 4b eine konstante Breite aufweist, die der Breite des Einschnittabschnitts 4a an dessen laufstreifenaußenseitigem Ende entspricht.

Die in den langgestreckten Profilblöcken 3 schulterseitig ausgebildeten Einschnitte 5 weisen eine Breite auf, in an ihrem laufstreifeninnenseitig gelegenen Ende am geringsten ist und 0,40 mm bis 0,60 mm beträgt. Die Breite der Einschnitte 5 nimmt in Richtung Laufstreifenrand I fortlaufend zu und beträgt an den Laufstreifenrändern das 1,5- bis 3-Fache ihrer Breite an den laufstreifeninnenseitig gelegenen Enden.

Bei der in Fig. 2 dargestellten alternativen Ausführung ist anstelle der Einschnitte 4, 5 jeweils ein einziger durchgehend verlaufender Einschnitt 4, parallel zu den Schrägrillen 1 vorgesehen, wobei die Breite der Einschnittabschnitte 4a, 4b, 4c fortlaufend größer wird, mit der geringsten Breite an den bei der Umfangsmittellinie M-M befindlichen Enden und der größten Breite an den Laufstreifenrändern I. Analog zu dem bereits Beschriebenen ändert sich dabei die Breite von einer Breite von 0,40 mm bis 0,60 mm an den laufstreifeninnenseitigen Enden der Einschnitte 4 auf eine Breite an den laufstreifenrandseitigen Enden, die das 1,5-Fache bis 3-Fache der erwähnten geringsten Breite beträgt. Auch bei dieser Ausführung kann zumindest einer der Einschnittabschnitte 4a, 4b, 4c eine konstante Breite aufweisen, wobei der gesamte Einschnitt 4 über seine Erstreckung in Richtung Laufstreifenrand nicht schmäler wird.

In jedem Fall ist die Breite b₂ der Einschnitte 4, 5 in ihrem gesamten Verlauf geringer, an der breitesten Stelle jeweils um mindestens 1,00 mm geringer, als die geringste Breite b₁ der Schrägrillen 1.

### Bezugszeichenliste

- 1: Schrägrille
- 1a, 1b, 1c: Rillenabschnitt
- 2: Umfangseinschnitt
- 3: Profilblock
- 4, 5: Einschnitt
- 4a, 4b, 4c: Einschnittabschnitt
- α₁, α₂, α₃: Winkel
- β₁, β₂, β₃: Winkel
- b₁, b₂: Breite
- I: Laufstreifenrand
- M-M: Umfangsm ittellinie
- R: Abrollrichtung bei Vorwärtsfahrt
- T: Profiltiefe

## Patentansprüche

1. Fahrzeugreifen mit einem laufrichtungsgebunden gestalteten Laufstreifen mit über die Laufstreifenbreite V-förmig zueinander verlaufenden, zumindest Großteils auf die vorgesehene Profiltiefe ausgeführten, einen laufstreifeninnenseitigen Rillenabschnitt (1a), einen laufstreifenrandseitigen Rillenabschnitt (1c) und einen mittleren Rillenabschnitt (1b) aufweisende Schrägrillen (1), welche in jeder Laufstreifenhälfte in Umfangsrichtung aufeinanderfolgende und zumindest bis zu den seitlichen Laufstreifenrändern verlaufende langgestreckte Profilblöcke (3) begrenzen,
wobei die Rillenabschnitte (1a, 1b, 1c) unter Winkeln (α₁, α₂, α₃) zur Umfangsrichtung verlaufen, welche beginnend beim laufstreifeninnenseitigen Rillenabschnitt (1a) von Rillenabschnitt (1b) zu Rillenabschnitt (1c) größer sind, und wobei mittig innerhalb der Profilblöcke (3) jeweils ein zumindest einen parallel zum laufstreifeninnenseitigen Rillenabschnitt (1a) und einen parallel zum mittleren Rillenabschnitt (1b) der Schrägrillen (1) verlaufenden Einschnittabschnitt (4a, 4b) aufweisender Einschnitt (4) verläuft,
**dadurch gekennzeichnet,**
**dass** sich zumindest einer dieser Einschnittabschnitte (4a, 4b) in Richtung Laufstreifenrand fortlaufend verbreitert,
wobei an diesen Einschnittabschnitt (4a, 4b) laufstreifenrandseitig und/oder laufstreifeinnenseitig zumindest ein weiterer Einschnittabschnitt (4a, 4b, 4c) anschließt, welcher sich in Richtung Laufstreifenrand fortlaufend verbreitert oder eine konstante Breite aufweist,
wobei jeder laufstreifenrandseitig anschließende Einschnittabschnitt (4a, 4b, 4c) eine Mindestbreite aufweist, die zumindest der Maximalbreite des sich kontinuierlich verbreiternden Einschnittabschnitts (4a) beträgt und
wobei jeder laufstreifeninnenseitig anschließende Einschnittabschnitt (4a, 4b) eine Maximalbreite aufweist, die höchstens der Mindestbreite des sich kontinuierlich verbreiternden Einschnittabschnitts (4b, 4c) beträgt.

2. Fahrzeugreifen nach Anspruch 1, **dadurch gekennzeichnet, dass** der Einschnitt (4) einen einzigen sich in Richtung Laufstreifenrand fortlaufend verbreiternden Einschnittabschnitt (4a, 4b) aufweist, welcher entweder zum laufstreifeninnenseitigen Rillenabschnitt (1a) oder zum mittleren Rillenabschnitt (1b) der Schrägrillen (1) parallel verläuft, eine Mindestbreite von 0,40 mm bis 0,60 mm und eine Maximalbreite vom 1,5-Fachen bis 3-Fachen der Mindestbreite aufweist.

3. Fahrzeugreifen nach Anspruch 1, **dadurch gekennzeichnet, dass** sich der parallel zum laufstreifeninnenseitigen und der sich parallel zum mittleren Rillenabschnitt (1a, 1b) der Schrägrillen (1) verlaufende Einschnittabschnitt (4a, 4b) jeweils in Richtung Laufstreifenrand fortlaufend verbreitert, wobei der parallel zum laufstreifeninnenseitigen Rillenabschnitt (1a) der Schrägrillen (1) verlaufende Einschnittabschnitt (4a) eine Mindestbreite von 0,40 mm bis 0,60 mm und der parallel zum mittleren Rillenabschnitt verlaufende Einschnittabschnitt (4b) eine Maximalbreite vom 1,5-Fachen bis 3-Fachen der Mindestbreite aufweist.

4. Fahrzeugreifen nach Anspruch 1 oder 3, **dadurch gekennzeichnet, dass** der Einschnitt (4) einen weiteren parallel zum laufstreifenrandseitigen Rillenabschnitt (1c) der Schrägrillen (1) verlaufenden Einschnittabschnitt (4c) aufweist, wobei sich der Einschnitt (4) über sämtliche Einschnittabschnitte (4a, 4b, 4c) fortlaufend ausgehend von einer Mindestbreite von 0,40 mm bis 0,60 mm an seinem laufstreifeninnenseitigen Ende bis zum 1,5-Fachen bis 3-Fachen der Mindestbreite am Laufstreifenrand verbreitert.

5. Fahrzeugreifen nach einem der Ansprüche 1 bis 3, **dadurch gekennzeichnet, dass** in Fortsetzung des Verlaufs des Einschnitts (4) ein zweiter parallel zum laufstreifenrandseitigen Rillenabschnitt (1c) der Schrägrillen (1) verlaufender Einschnitt (5) vorhanden ist, welcher sich in Richtung Laufstreifenrand fortlaufend verbreitert.

6. Fahrzeugreifen nach Anspruch 5, **dadurch gekennzeichnet, dass** der zweite Einschnitt (5) eine Mindestbreite von 0,40 mm bis 0,60 mm und eine Maximalbreite vom 1,5-Fachen bis 3-Fachen der Mindestbreite aufweist.

7. Fahrzeugreifen nach einem der Ansprüche 1 bis 6, **dadurch gekennzeichnet, dass** der innere Rillenabschnitt (1a) der Schrägrillen (1) unter einem Winkel (α₁) von 40° bis 55° zur Umfangsrichtung, der mittlere Rillenabschnitt (1b) unter einem Winkel (α₂) von 60° bis 70° zur Umfangsrichtung und der laufstreifenrandseitige Rillenabschnitt (1c) unter einem Winkel (α₃) von 75° bis 90° zur Umfangsrichtung verläuft, wobei die Winkel (α₁, α₂, α₃) an den Mittellinien der Rillenabschnitte (1a, 1b, 1c) ermittelt sind.

8. Fahrzeugreifen nach einem der Ansprüche 1 bis 7, **dadurch gekennzeichnet, dass** die Maximalbreite jeweils das 1,5-Fache bis 2-Fache der Mindestbreite beträgt.

9. Fahrzeugreifen nach einem der Ansprüche 1 bis 8, **dadurch gekennzeichnet, dass** sich der Einschnitt bzw. die Einschnitte (4, 5) bzw. der/die Einschnittabschnitte (4a, 4b, 4c) kontinuierlich verbreitern.
